# EUROPEAN PATENT APPLICATION

(11) **EP 0 913 689 A1**
(43) Date of publication of application: **06.05.1999**
(21) Application number: 97947902.9
(22) Date of filing: 11.12.1997
(51) Int. Cl.: G01N 31/00, G01N 21/77

(54) **METHOD FOR DETECTING S-NITROSO COMPOUND**

(30) Priority: 17.04.1997 JP 116451/97; 09.09.1997 JP 262812/97
(71) Applicant: Eicom Corporation, Kyoto-shi, Kyoto 612 (JP); Akaike, Takaaki, Kumamoto-shi, Kumamoto 862 (JP)
(72) Inventor: AKAIKE, Takaaki, Kumamoto-shi, Kumamoto 862 (JP); NISHINO, Hirohito, Kusatsu-shi, Shiga 525 (JP)
(74) Representative: Gritschneder, Martin, Dipl.-Phys.
(86) International application number: JP9704568
(87) International publication number: WO9846992

(57) **Abstract**

The present invention relates to a quantitative analysis of S-nitroso compounds, consisting in passing a mobile phase having a sample injected therein through a separating column 5 to separate an S-nitroso compound, adding a non-alkaline solution containing a salt of mercury, silver or copper to said separated S-nitroso compound by a reaction liquid pump 7 to liberate HNO₂ from said compound within a reaction channel 6, and either adding the Greiss reagent from a reaction liquid pump 9 to the HNO₂ in the liquid obtained during or after this liberation process so as to form a diazo compound, and effecting an absorption measurement of the concentration of the thus-formed diazo compound by a detector 10 or adding a fluorescence reagent which consists of diaminonaphthalene or a substance similar to diaminonaphthalene together with a salt of mercury, silver or copper by a reaction liquid pump 7 so as to form a fluorescent azo compound, adding a fluorescence conferring agent thereto for treatment by the reaction liquid pump 9, and then effecting a fluorometric measurement by a detector.

## Description

### TECHNICAL FIELD

The present invention relates to a method of measuring S-nitrosoated nitrogen monoxide (NO) which is produced in the living body.

### BACKGROUND ART

It has been recognized that in the living body, nitrogen monoxide (NO) acts as an intercellular transmitter and a hypothesis has been advanced that in the blood vessel system, the NO liberated from vascular endothelial cells and governing nerves combines with hemoglobin and other proteins, while S-nitrosoated NO is dissociated from such proteins as hemoglobin to exert a vasodilative action, said hypothesis having attracted considerable attention.

As is known in the art, NO is highly reactive and since its existential time as a simple substance is very short, or about 1 - 2 seconds, it has been believed that it exists in the form of an S-nitroso compound in the blood vessel system, as described above, providing a lasting NO source. Therefore, the measurement of S-nitroso compounds is indispensable for the clarification of the behavior of NO in the living body, and the methods presently employed have many problems in respect of sensitivity and simplicity.

That is, nitroso compounds have an absorption peak at 320 nm, and even if this characteristic is utilized directly for absorptiometry, the sensitivity is low and the influences of the noise due to inclusions and of the background cannot be excluded; thus, it is considered that no reliable measured values can be obtained. Further, there is a method for measuring the chemiluminescence which is produced on reaction between ozone and NO which is produced by the photolysis of nitroso compounds. This method, however, requires an ozone generator and the operation involved is complicated, so that it is impracticable.

### DISCLOSURE OF THE INVENTION

An object of the invention is to provide an effective and simple method and apparatus for measuring S-nitroso compounds.

To solve the above problem, the invention provides a method of detecting S-nitroso compounds, which comprises the steps of injecting a sample containing an S-nitroso compound into a mobile phase, passing said mobile phase having said sample injected thereinto through a separating column to separate the S-nitroso compound, adding a solution containing a salt of mercury, silver or copper to said separated S-nitroso compound so as to liberate HNO, adding the Greiss reagent to the HNOin the liquid obtained during or after this liberation process so as to form a diazo compound, and measuring the absorbancy which corresponds to the concentration of the thus-formed diazo compound.

Secondly, the invention provides a method of detecting S-nitroso compounds, which comprises the steps of injecting a sample containing an S-nitroso compound into a mobile phase, passing said mobile phase having said sample injected thereinto through a separating column to separate the S-nitroso compound, adding a solution containing a salt of mercury, silver or copper to said separated S-nitroso compound so as to liberate HNO₂, adding a fluorescence reagent which consists of diaminonaphthalene or a substance similar to diaminonaphthalene to the HNO₂ in the liquid obtained during or after this liberation process so as to allow it to react with the HNO₂ to form a fluorescent azo compound, and measuring the intensity of the fluorescence thereof.

In the first and second schemes of the invention described above, through a process in which an excess of a salt of mercury (II), a salt of silver or a salt of copper is added to an S-nitroso compound such as nitroso glutathion, nitroso cysteine or protein S-NO joined to the SH group in cysteine, their metallic ions are liberated from the S-nitroso compound. And in the first scheme, the absorbancy of the diazo compound produced by addition of the reagent is measured, thereby making it possible to obtain the measuring sensitivity and linearity in a wide concentration range, while in the second scheme, the emission of fluorescent light from the fluorescent azo compound produced by addition of a fluorescence reagent which consists of diaminonaphthalene or a substance similar to diaminonaphthalene is measured, thereby making possible the practical detection of S-nitroso compounds.

On the other hand, if the object substance in a sample is a high molecular S-nitroso compound, e.g., nitroso albumin or nitro hemoglobin, the high molecular compound resulting from liberating HNO₂ therefrom absorbs at substantially the same wavelength as the absorption peak (540 mm) of diazo compounds, a fact which forms a cause of error in absorptiometry which cannot be disregarded. Further, the fact that the absorption characteristics of this high molecular compound partly overlap those of diazo compounds leads to a prediction that this will adversely affect the fluorometric measurement of fluorescent azo compounds.

Therefore, the present invention provides a method of detecting high molecular nitroso compounds, wherein in the first and second methods of the invention, a high molecular compound is trapped from a liquid containing HNO₂ which is liberated by addition of a solution of a metallic salt and then the Greiss reagent or a fluorescence reagent is added to HNO.

### BRIEF DESCRIPTION OF THE DRAWINGS

Fig. 1 is channel block diagram showing an example of an apparatus arrangement which basically embodies a first method of the invention;
Fig. 2 is a flow diagram which embodies a second method of the invention with respect to high molecules;
Fig. 3 is a flow diagram showing an example of an apparatus arrangement which basically embodies a third method of the invention;
Fig. 4 is a flow diagram showing an example of an apparatus arrangement which embodies a fourth method of the invention with respect to high molecules;
Fig. 5 shows an elution chromatogram (a) which is measured when an S-nitroso compound is nitroso glutathion and an elution chromatogram (b) which is measured when it is nitroso albumin.

### BEST MODE FOR EMBODYING THE INVENTION

### Basic Embodiment of First Method (Absorptiometric Method)

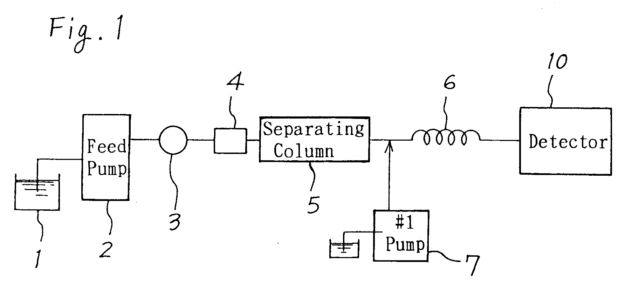

In this embodiment, in order to analyze a relatively low molecular compound as an S-nitroso compound, for example, nitroso glutathion, an apparatus arrangement shown in the flow diagram of Fig. 1 is used. In the order of flow shown in Fig. 1, the numeral 1 denotes a liquid reservoir for a column mobile phase; 2 denotes a liquid feed pump; 3 denotes an injector for injecting a sample into the mobile phase in a liquid feed channel; 4 denotes a precolumn for removing, from the sample injected into the mobile phase, components which cannot be separated or eluted in the next S-nitroso compound removing or separating column 5 (hereinafter referred to as separating column); 6 denotes a coil serving as a reaction channel for metallic ions or the like connected to the elution port of the separating column; 7 denotes a reaction liquid pump for introducing a non-alkaline solution containing ions such as Hg (II), Ag (I) or Cu (II) from the upstream end of said first coil into said coil channel; and 10 denotes a detector including an optical measuring system for irradiating the outflow phase from the reaction coil channel with light to measure the absorbancy for the wavelength corresponding to the product.

As the mobile phase, a liquid which is 10 mM of acetic acid buffer solution / methanol(=93 / 7 vol., including 0.5 mM of diethyl triamine pentane acetate, pH 5.5) is fed at a rate of 0.5 ml/min by the pump 2. The separating column 5, which is a reversed phase system column, is capable of eluting the nitroso glutathion by developing the sample by this mobile phase.

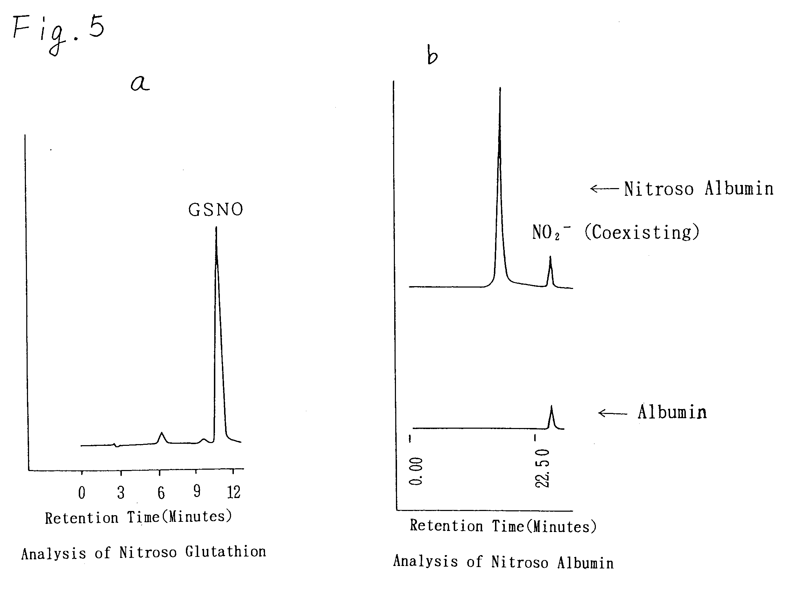

The reaction liquid pump 7 feeds, in this case, a solution which is prepared by adjusting, 1.75 mM of HgCl₂ containing Hg (II) ions capable of liberating HNO₂ most efficiently from the band of S-nitroso compound with 0.1 mM of HCl, and also the Greiss reagent, each at a rate of 0.2 ml / min into the coil 6 (0.25 mm⌀ x 4 m), the HNO₂ which is liberated in this coil simultaneously reacting with the Greiss reagent to produce a diazo compound. As for the Greiss reagent, in this case, use is made of a 2% phosphate solution containing 1% sulfanilamide and 0.1% naphtylethylene diamine is used. In addition, since the amounts of Hg (II) solution and the Greiss reagent to be fed have to be rigidly controlled and for other reasons, the arrangement may be made such that the pump 7 feeds the Hg (II) solution alone into the coil 6 while an exclusive reagent pump and a reagent reaction coil are additionally installed downstream thereof. Since diazo compounds exhibit a red color and have an absorption band in the vicinity of 540 nm, the detector 10 is constructed as an absorptiometer including a light source having the wavelength thereof and a light receiving element, whereby the size of the absorption peak was measured to obtain a linear response to a slight amount of S-nitroso compound (10 ⁻⁸ - 10⁻³ M). An elution chromatogram obtained when such S-nitroso compound is nitroso glutathion is as shown in Fig. 5 (a).

### Embodiment of First Method (Absorptiometric Method) Applied to High polymers

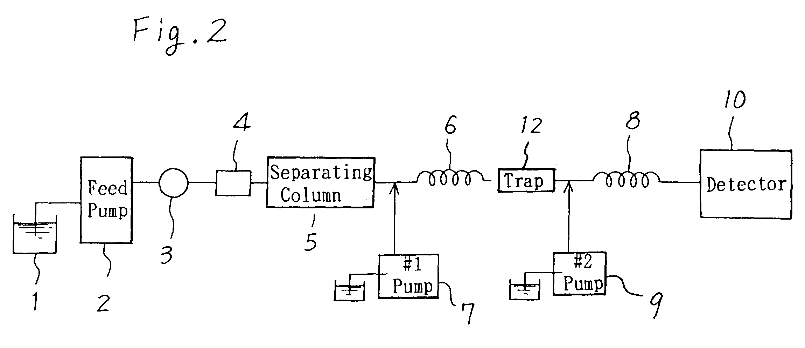

When nitroso albumin or the like which is a relatively high polymer selected as an S-nitroso compound is to be analyzed, an apparatus arrangement shown in Fig. 2 is used. In the order of flow in Fig. 2, with the numerals 1 - 7 and 10 denoting the same things as in Fig. 1, the numeral 8 denotes a second coil serving as a reagent reaction channel connected to the downstream end of the aforesaid coil 6; 9 denotes a second reaction liquid pump for introducing a reagent from the upstream end of said second coil 8 to the coil channel; and 12 denotes a trap for arresting the high polymer compound after liberation of HNO₃ present in the outflow phase from the first coil 6.

When an S-nitroso compound to be analyzed is nitroso albumin, the mobile phase is in the form of 10 mM of acetic acid buffer solution (pH 5.5) containing 0.5 mM of diethyltriamine pentane acetate and is fed at a flow rate of 0.5 ml/min by the pump 2. The separating column 5 is, in this case, a gel filtration column arranged in accordance with the molecular amount and the mobile phase is capable of developing the sample to elude nitroso albumin.

Fed from the reaction liquid pump 7 is, in this case, a solution which is obtained when 1.75 mM of HgCl₂ containing Hg (II) ions capable of liberating NHO₂ most efficiently from the band of S-nitroso compound is adjusted by 0.1 mM of acetic acid buffer solution. Therefore, the liquid passing through the first coil 6 (0.25 mm⌀ x 4 m) contains liberated or free HNO₂ and high molecular compounds (albumin, hemoglobin, etc.) resulting from the liberation thereof, said high molecular compounds being adsorptively removed by the trap 12. Thus the HNO₂ in the liquid leaving the trap 12 reacts in the second coil 8 (0.25 ⌀ x 4 m) with the Griess reagent fed by the reagent pump 9, thereby forming a diazo compound. The Griess reagent, as in the case of the preceding embodiment, is a 2% phosphoric acid solution containing 1% sulfanilamide and 0.1% naphthylethylene diamine. In this manner, high molecular interference components, such as hemoglobin having an absorption band in the vicinity of 540 nm similar to that of diazo compounds are eliminated and the detector 10 has given an accurate linear response to a slight amount of S-nitroso compound (10⁻⁸ - 10⁻³ M). The elution chromatogram measured when an S-nitroso compound is nitroso albumin is as shown in Fig. 5 (b).

### Basic Embodiment of Second Method (Fluorometry)

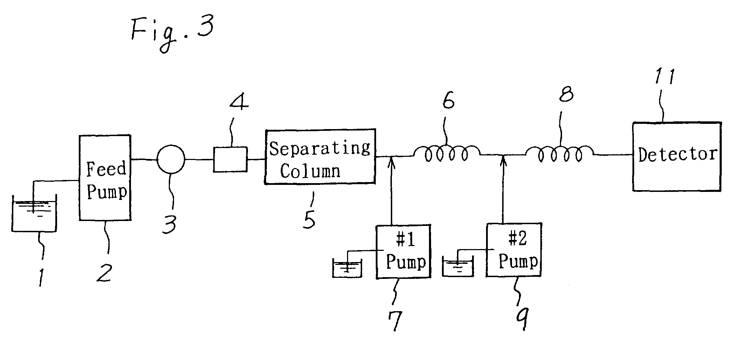

In a second method of the invention, when the same S-nitroso glutathion as in the first basic method, for example, is selected as an S-nitroso compound of relatively low molecular weight to be analyzed, an apparatus arrangement shown in Fig. 3 is used. The components 1 through 9 of this apparatus arrangement are the same in physical function as the components 1 through 9 shown in Fig. 2. In this embodiment, however, the trap for high molecular compounds is unnecessary and the detector 11 sheds light (exited at 365 nm) on the outflow phase from the second coil channel 8; thus, it is constructed as a fluorometer for measuring the light (with a peak at 450 nm when excited at 365 nm and a peak at 425 nm when excited at 380 nm) from the fluorescent azo compound in the outflow phase.

In this method, 10 mM of a solution comprising acetic acid buffer liquid / methanol (= 93 / 7 vol, including 9.5 mM of ethylene diamine, Ph 5. 5) is used as the mobile phase and fed at a flow rate of 0.5 ml / min by the pump 2, and the separating column 5, as in the case of the embodiment shown in Fig. 1, is capable of developing the mobile phase including a sample to provide an elution including a band of S-nitroso compound.

The reaction liquid pump 7 feeds, in this case, an aqueous solution comprising 1.75 mM of HgCl₂ containing Hg (II) ions capable of liberating NHO₂ most efficiently from the band of S-nitroso compound and a fluorescent reagent consisting of diaminonaphthalene or a substance similar to diaminonaphthalene, thereby liberating NHO₂ within the first coil 6 while concurrently therewith the fluorescent reagent consisting of diaminonaphthalene or a substance similar to diaminonaphthalene is allowed to react with the NHO₂ to produce a fluorescent azo compound (triazole compound). This fluorescent azo compound actually exhibits the excited luminescence characteristics mentioned above by being alkalified. Therefore, the second coil 8 is used as a fluorescence conferring channel therefor, and the pump 9 sends an alkaline solution, for example, caustic soda, 0.4 mol (Ph 12), into this coil channel. And the optical measuring system of the detector 10 irradiates the outflow phase with the light which includes said excitation wavelength and the peak intensity of the resulting fluorescent light is measured to determine the amount of the S-nitroso compound. Thereby, there has been obtained a linear response to the slight amount of S-nitroso compound (10 ⁻⁹ - 10⁻⁴).

### Embodiment of Second Method (Fluorometry) Applied to High polymers

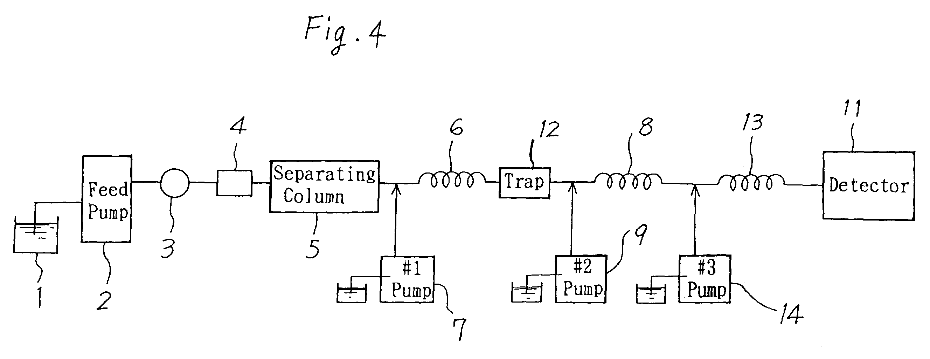

In the second method of the invention, when nitroso albumin or the like which is a relatively high polymer selected as an S-nitroso compound is to be analyzed, an apparatus arrangement shown in Fig. 4 is used. In this arrangement, the same trap 12 as that shown in Fig. 2 is disposed between the first and second coils 6 and 8, a third coIl 13 is inserted between the coil 8 and the detector 11, and a reagent pump 14 is connected to the upstream side of the coil 13.

In this method, as in the case of the application of the first method to high molecular compounds, 10 mM of acetic acid buffer solution containing diethyltriamine pentane acetate is fed as a mobile phase at a flow rate of 0.5 ml / min by the pump 2, and the separating column 2, as in the case of the embodiment of Fig. 2, is capable of developing the mobile phase including a sample to provide an elution containing a band of S-nitroso compound.

The reaction liquid pump 7 feeds, in this case, 1.75 mM of HgCl₂ containing Hg (II) ions capable of liberating HNO₂ most efficiently, at a rate of 0.2 ml / min into the coil 6. The liquid leaving the coil 6 after the liberation of HNO₂ passes through the trap 12, whereby the high molecular compounds, such as albumin and hemoglobin, are removed. The liquid leaving the trap 12 flows into the second coil 8, into which the pump 9a concurrently feeds a fluorescence reagent which consists of diaminonaphthalene or a substance similar to diaminonaphthalene, said fluorescence reagent reacting with the HNO₂ in the solution to form a fluorescent triazole compound. In order to allow the fluorescent triazole compound to actually exhibit the excited luminescence characteristics by alkalifying it as described above, the third coil 13 is used as a fluorescence conferring channel therefor, and an alkaline liquid, e.g., caustic soda, 0.4 mol (Ph 12), serving as a fluorescence conferring agent is fed by a pump 14 into the upstream side of said coil channel. The optical measuring system of the detector 11 irradiates the outflow phase with the light which includes said excitation wavelength and the intensity of the resulting fluorescent light is measured, thereby determining the amount of the S-nitroso compound. Thereby, there has been obtained a linear response to the slight amount of S-nitroso compound (10 ⁻⁹ - 10⁻⁴). In addition, the third coil 13 may be the same in volume as the first and second coils 6 and 8.

### INDUSTRIAL APPLICABILITY

As has so far been described, the present invention provides a method and apparatus for conveniently and reliably measuring the amount of NO which is S-nitrosoated in the living body on an on-line measurement basis. When importance is attached to sensitivity, a second method is used which adds a fluorescence reagent which consists of d iaminonaphthalene or a substance similar to diaminonaphthalene, and when importance is attached to stability, a first method which is an absorptiometric method is recommended which adds the Greiss reagent.

Further, particularly when high molecular compounds are to be analyzed, correct measured values can be obtained by trapping their high molecules after the liberation of HNO₂.

## Claims

1. A method of detecting S-nitroso compounds, comprising the steps of injecting a sample containing an S-nitroso compound into a mobile phase, passing said mobile phase having said sample injected thereinto through a separating column to separate the S-nitroso compound, adding a solution containing a salt of mercury, silver or copper to said separated S-nitroso compound so as to liberate HNO₂, adding the Greiss reagent to the HNO₂ in the liquid obtained during or after this liberation process so as to form a diazo compound, and measuring the absorbancy which corresponds to the concentration of the thus-formed diazo compound.

2. A method of detecting S-nitroso compounds, comprising the steps of injecting a sample containing an S-nitroso compound into a mobile phase, passing said mobile phase having said sample injected thereinto through a separating column to separate the S-nitroso compound, adding a solution containing a salt of mercury, silver or copper to said separated S-nitroso compound so as to liberate HNO₂, trapping a high molecular compound from the liquid which has undergone said liberating process, adding the Greiss reagent to the HNO₂ which is present in the liquid after said trapping so as to form a diazo compound, and measuring the absorbancy corresponding to the concentration of the thus-formed diazo compound.

3. A method of detecting S-nitroso compounds, which comprises the steps of injecting a sample containing an S-nitroso compound into a mobile phase, passing said mobile phase having said sample injected thereinto through a separating column to separate the S-nitroso compound, adding a solution containing a salt of mercury, silver or copper to said separated S-nitroso compound so as to liberate HNO₂, adding a fluorescence reagent which consists of diaminonaphthalene or a substance similar to diaminonaphthalene to the HNO₂ in the liquid obtained during or after this liberation process so as to allow it to react with the HNO₂ to form a fluorescent azo compound, subjecting said fluorescent azo compound to a fluorescence conferring treatment, and irradiating it with exciting light to measure the intensity of the fluorescence thereof.

4. A method of detecting S-nitroso compounds, which comprises the steps of injecting a sample containing an S-nitroso compound into a mobile phase, passing said mobile phase having said sample injected thereinto through a separating column to separate the S-nitroso compound, adding a non-alkaline solution containing a salt of mercury, silver or copper to said separated S-nitroso compound so as to liberate HNO₂, trapping a high molecular compound from the liquid which has undergone said liberating process, adding a fluorescence reagent which consists of diaminonaphthalene or a substance similar to diaminonaphthalene to the HNO₂ present in the liquid obtained after this trapping process so as to allow it to react with the HNO₂ to form a fluorescent azo compound, subjecting said fluorescent azo compound to a fluorescence conferring treatment, and irradiating it with exciting light to measure the intensity of the fluorescence thereof.
